# FASCICULE DE BREVET EUROPEEN

(11) **EP 3 710 750 B1**
(45) Date de publication et mention de la délivrance du brevet: **19.07.2023**
(21) Numéro de dépôt: 18804371.5
(22) Date de dépôt: 05.11.2018
(51) Int. Cl.: A21B 5/02, F24C 7/06, A47J 37/06

(54) **APPAREIL DE CUISSON POUR PREPARATIONS PATISSIERES**
BACKGERÄT FÜR BACKWARENZUBEREITUNGEN
COOKING APPLIANCE FOR PASTRY PREPARATIONS

(30) Priorité: 08.11.2017 FR 1760505
(43) Date de publication de la demande: 23.09.2020
(73) Titulaire: SEB S.A., 69130 Ecully (FR)
(72) Inventeur: VOLATIER, Sébastien, 21000 Dijon (FR); BLONDEL, Mathilde, 24700 Louviers (FR)
(74) Mandataire: SEB Développement
(86) Numéro de dépôt international: PCT/FR2018/052723
(87) Numéro de publication internationale: WO 2019/092347

(56) Documents cités:
- WO-A1-02/21985
- WO-A1-2014/076511
- DE-A1-102014 227 046
- FR-A1- 2 791 524

## Description

La présente invention concerne de manière générale un appareil de cuisson et en particulier un appareil de cuisson ménager pour cuire des préparations culinaires, telles que des gâteaux.

Il est connu dans l'art antérieur de tels dispositifs de cuisson, et le document EP0696430 décrit un appareil multifonction qui intègre un plat creux qui permet de réaliser diverses préparations. L'appareil comprend des résistances électriques chauffantes et nécessite une quantité importante d'énergie pour chauffer les aliments à cuire. Ce défaut est aggravé avec une préparation pâtissière, car une grande quantité de pâte est à chauffer, ce qui accentue le besoin d'énergie électrique.

Les documents de l'art antérieur suivants sont également pertinents par rapport à la présente invention: FR2791524 A1, WO 02/21985 A1 et WO 2014/076511 A1.

Un but de la présente invention est de répondre aux inconvénients de l'art antérieur mentionnés ci-dessus et en particulier, tout d'abord, de proposer un appareil de cuisson pour préparations pâtissières, qui présente une efficacité énergétique améliorée.

Pour cela un premier aspect de l'invention concerne un appareil de cuisson pour préparations pâtissières comprenant une embase et un couvercle articulé sur l'embase entre une première position relevée pour permettre l'introduction d'une préparation pâtissière dans une enceinte de cuisson et une deuxième position abaissée pour former un boitier de cuisson de la préparation pâtissière, le couvercle et l'embase comprenant chacun une portion du boîtier de cuisson et des moyens de chauffage, ledit appareil étant caractérisé :
- en ce que le couvercle et l'embase comprennent chacun en outre un réflecteur et une cuve interne,
- en ce que, dans la deuxième position abaissée :
   - la cuve interne du couvercle et la cuve interne de l'embase forment l'enceinte de cuisson agencée pour recevoir la préparation pâtissière,
   - le réflecteur du couvercle et le réflecteur de l'embase forment une enceinte de chauffe entourant l'enceinte de cuisson,
- en ce que les moyens de chauffage du couvercle et de l'embase sont disposés entre l'enceinte de chauffe et l'enceinte de cuisson
- et en ce que dans la deuxième position abaissée, le réflecteur du couvercle et le réflecteur de l'embase forment une enceinte de chauffe fermée.

L'enceinte de chauffe est alors un espace clos, dans la deuxième position du couvercle, ce qui permet de limiter les pertes d'énergie par convection par exemple. Comme vu ci-dessus, dans le domaine des appareils domestiques de cuisson, un tel espace clos peut présenter quelques ouvertures ou espacements entre les réflecteurs, de l'ordre de quelques dixièmes de millimètre ou même jusqu'à un ou deux millimètres.

Selon la mise en oeuvre ci-dessus, l'appareil de cuisson en position fermée comprend une enceinte de cuisson et une enceinte de chauffe, avec les moyens de chauffage agencés dans l'enceinte de chauffe, autour de l'enceinte de cuisson. La chaleur est ainsi confinée, le volume à chauffer réduit, si bien que l'invention, pour un même volume de pâte à cuire et un encombrement extérieur similaire (l'ajout de réflecteurs ne nécessite pas beaucoup d'espace), permet de réduire notablement la quantité d'énergie requise, jusqu'à 50%, ainsi que le temps total de cuisson. L'appareil reste compact.

Avantageusement, dans la deuxième position abaissée, la cuve interne du couvercle et la cuve interne de l'embase présentent chacune un bord périphérique en regard l'un de l'autre et/ou en contact l'un avec l'autre. L'enceinte de cuisson est alors un espace clos, dans la deuxième position du couvercle bien sûr. Bien entendu, dans le domaine des appareils domestiques de cuisson, un tel espace clos peut présenter quelques ouvertures ou espacements entre les cuves internes, de l'ordre de quelques dixièmes de millimètre ou même jusqu'à un ou deux millimètres.

Avantageusement, le couvercle est articulé sur l'embase selon une liaison pivot agencée sur une partie arrière de l'appareil, l'appareil comprenant des poignées latérales et une interface de commande sur une partie avant de l'appareil, l'appareil comprenant en outre au moins un évent agencé pour évacuer de la vapeur d'eau depuis l'enceinte de cuisson vers l'extérieur du boîtier de cuisson, en partie arrière de l'appareil de cuisson. Lors de la cuisson d'un gâteau, une grande quantité d'eau doit être évacuée sous forme de vapeur d'eau, et l'invention prévoit un évent qui évite de laisser la vapeur d'eau chauffer des zones susceptibles d'être touchées par l'utilisateur. En d'autres termes, l'évent est agencé pour évacuer de la vapeur d'eau générée lors de la cuisson ailleurs que vers l'avant (où se trouvent une poignée, une interface homme machine, et potentiellement l'utilisateur) ou les côtés de l'appareil (où se trouvent des poignées). Les parties de l'appareil que l'utilisateur touche (poignées, interface homme machine...) sont donc éloignées de l'évent et des flux de vapeur chaude.

Avantageusement, l'évent est un conduit formé par un tube avec une première extrémité donnant dans l'enceinte de cuisson, et une deuxième extrémité donnant sur l'extérieur de l'appareil de cuisson. Le tube traverse l'espace entre l'enceinte de cuisson et l'enceinte de chauffe, sans communiquer avec. La vapeur d'eau par exemple ne peut pas aller dans cet espace entre l'enceinte de cuisson et l'enceinte de chauffe, où se trouvent les moyens de chauffe, ce qui les préserve.

Avantageusement, dans la deuxième position abaissée, un espace entre les réflecteurs et les cuves internes est un espace fermé. L'évent ne communique pas ni ne donne sur cet espace inter enceintes.

Avantageusement, dans le couvercle et dans l'embase, le réflecteur est agencé à une distance prédéterminée de la cuve interne. En d'autres termes, le réflecteur ne touche pas la cuve de cuisson, pour limiter les conductions de chaleur.

Avantageusement, la cuve interne de l'embase est amovible. Cela permet de proposer plusieurs modèles interchangeables de cuve interne de l'embase, pour varier les moules et possibilités de préparations.

Avantageusement, les moyens de chauffage sont des résistances chauffantes, autrement appelées résistances électriques.

Avantageusement, le couvercle et/ou l'embase comprennent des moyens de mesure de température de leur cuve interne respective.

Avantageusement, l'appareil de cuisson pour préparations pâtissières comprend des moyens de commande de cuisson agencés pour commander indépendamment la chauffe des moyens de chauffage du couvercle et la chauffe des moyens de chauffage de l'embase. Cette mise en oeuvre permet d'éviter un déséquilibre de chauffe car le besoin de chaleur est dissymétrique (beaucoup de chaleur à fournir du côté inférieur (l'embase) où se trouve la pâte à chauffer, et peu de besoin en haut (le couvercle) où se trouve majoritairement de l'air.

Avantageusement, le réflecteur du couvercle et/ou de l'embase est métallique.

Avantageusement, dans la deuxième position abaissée, l'enceinte de chauffe présente un volume inférieur à 5.5 litres. Un tel volume limité permet de réduire le temps de cuisson et la quantité d'énergie.

Avantageusement, la portion de boîtier de cuisson du couvercle et de l'embase est formée par au moins un capot plastique. En d'autres termes, le boîtier externe n'est pas le réflecteur : ce dernier se trouve entre le boîtier externe et l'enceinte de cuisson.

Avantageusement, dans le couvercle et/ou l'embase, les moyens de chauffage sont agencés plus proches du réflecteur que de la cuve interne. Cette mise en oeuvre permet d'éviter des points chauds sur la cuve interne, de sorte à obtenir une préparation cuite de manière homogène.

Avantageusement, la cuve interne de l'embase est en métal revêtu d'un traitement de surface anti adhérent.

Avantageusement, l'appareil de cuisson pour préparations pâtissières comprend des moyens de positionnement et de maintien, agencés pour positionner et maintenir un moule amovible, tel qu'un moule en silicone, dans l'enceinte de cuisson.

Avantageusement, l'appareil de cuisson pour préparations pâtissières comprend une sole de cuisson, et les moyens de chauffage de l'embase sont agencés entre la sole de cuisson et le réflecteur de l'embase. Une telle sole de cuisson, agencée dans l'embase, permet de répartir la chaleur de manière homogène sur l'enceinte de cuisson, et permet d'éviter des points chauds sur la cuve interne, de sorte à obtenir une préparation cuite de manière homogène.

Avantageusement, la sole de cuisson comprend une pluralité de protubérances, formant des lignes ou des points de contact pour supporter un moule amovible reçu dans l'enceinte de cuisson.

Avantageusement, la sole de cuisson comprend une pluralité de perforations. Cela permet un échange de chaleur par convection.

Avantageusement, la sole de cuisson est une paroi métallique, telle qu'une paroi en aluminium.

Avantageusement, la sole de cuisson est une tôle gaufrée.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de face d'un appareil de cuisson pour préparations pâtissières selon l'invention, comprenant une embase et un couvercle en position fermée ou abaissée sur l'embase ;
- la figure 2 représente l'appareil de cuisson pour préparations pâtissières de la figure 1 vu de dessus ;
- la figure 3 représente l'appareil de cuisson pour préparations pâtissières de la figure 1 en perspective, avec le couvercle en position ouverte ou relevée ;
- la figure 4 représente une vue de côté en coupe de l'appareil de cuisson pour préparations pâtissières de la figure 1 ;
- la figure 5 représente un détail de la figure 4.

On entend par préparation pâtissière aussi bien une préparation culinaire sucrée que salée.

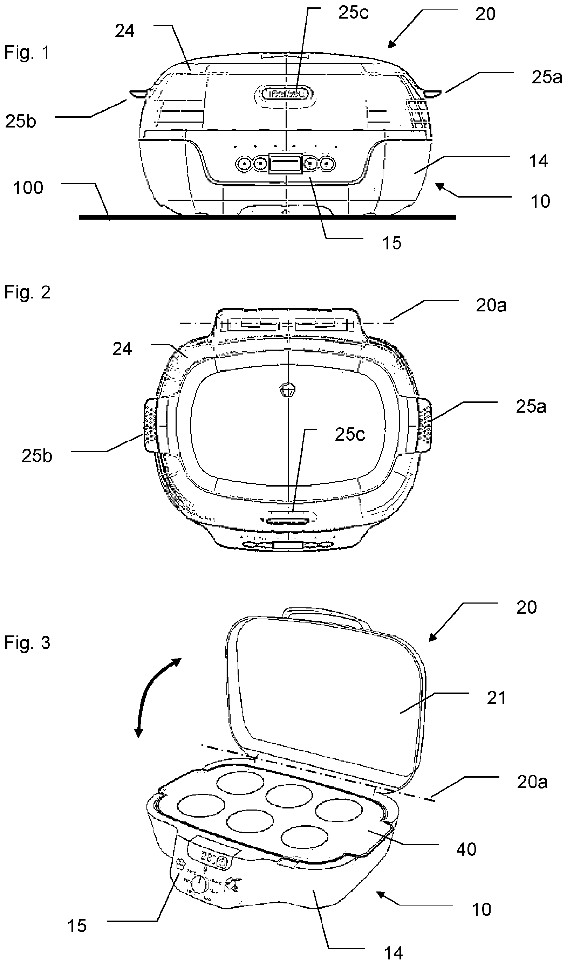

La figure 1 représente un appareil de cuisson pour préparations pâtissières reposant sur un support 100 (une table ou un plan de travail) et comprenant une embase 10 et un couvercle 20 en position abaissée ou fermée sur l'embase 10. Comme le montre la figure 3, le couvercle 20 peut également occuper une position ouverte ou relevée, pour donner accès à une enceinte de cuisson. Dans la présente demande, la position ouverte ou relevée est appelée première position relevée, et la position fermée ou abaissée est appelée deuxième position abaissée.

Pour pouvoir pivoter de la première position relevée à la deuxième position abaissée, le couvercle 20 est monté pivotant sur l'embase 10, par le biais d'une charnière située à l'arrière de l'appareil de cuisson pour préparations pâtissières, et qui définit un axe de pivotement 20a visible figures 2 et 3.

Comme le montrent les figures 1, 2 et 3, l'appareil de cuisson pour préparations pâtissières comprend un boîtier extérieur formé par une portion de boîtier de couvercle 24 et une portion de boîtier d'embase 14, toutes deux typiquement réalisées en matière plastique. Le couvercle 20 comprend aussi des poignées latérales 25a et 25b, et une poignée avant 25c, afin de permettre à l'utilisateur d'ouvrir et fermer aisément le couvercle 20.

L'appareil de cuisson pour préparations pâtissières est également équipé d'une interface homme machine 15 (ou d'une interface de commande) qui comprend par exemple un afficheur et des boutons de commande pour permettre à l'utilisateur de définir des cycles de cuisson et de démarrer / arrêter l'appareil de cuisson pour préparations pâtissières. Comme on le voit sur les figures 1 et 3, l'interface homme machine 15 est située sur l'embase 10, sur la face avant de l'appareil de cuisson pour préparations pâtissières.

La figure 3 représente l'appareil de cuisson pour préparations pâtissières avec le couvercle 20 en première position relevée, de sorte à rendre accessible un espace de cuisson où se trouve un moule 40 avec plusieurs empreintes, pour recevoir et faire cuire des portions de pâte à gâteau, pour préparer des petits gâteaux. Comme cela sera expliqué ci-dessous, le moule 40 est amovible pour être changé et/ou nettoyé aisément.

La figure 3 montre aussi une cuve interne 21 du couvercle 20, qui vient en regard du moule 40 lorsque le couvercle 20 est en deuxième position abaissée, pour fermer un espace de cuisson.

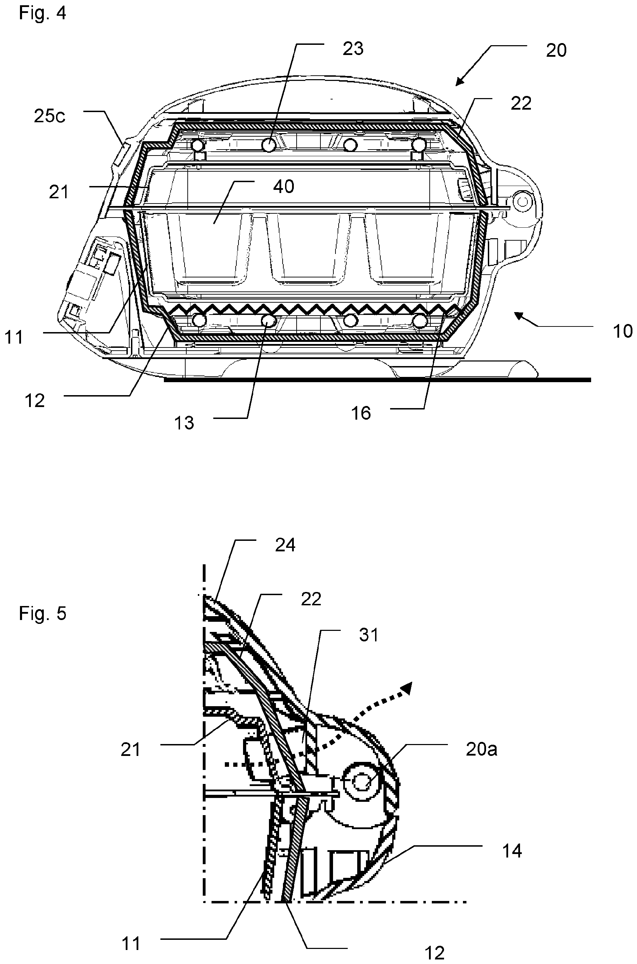

En effet, la figure 4 représente une vue de côté en coupe de l'appareil de cuisson pour préparations pâtissières, où l'on voit la cuve interne 21 du couvercle 20 qui est au-dessus du moule 40, et en regard d'une cuve interne 11 de l'embase 10, afin de former une enceinte de cuisson fermée.

La figure 4 montre aussi un réflecteur 22 et une résistance électrique 23 embarqués sur le couvercle 20, ainsi qu'une résistance électrique 13 et un réflecteur 12 implantés dans l'embase 10. Le réflecteur 22 et le réflecteur 12 sont en regard l'un de l'autre, de sorte à former une enceinte de chauffe qui contient donc les résistances électriques 13 et 23 (formant des moyens de chauffe) et l'enceinte de cuisson formée par les cuves internes 11 et 21. Typiquement, les réflecteurs 12 et 22 sont métalliques, avec au moins leur face interne agencée pour réfléchir un rayonnement de chauffage (paroi brillante, ou polie, ou lisse).

L'enceinte de chauffe est donc un espace fermé qui englobe les moyens de chauffe et l'enceinte de cuisson sans les toucher, si bien que l'espace à chauffer est de faible volume et clos, ce qui limite la quantité d'énergie à fournir, ainsi que les pertes thermiques. De plus, la structure à double paroi (enceinte de cuisson et enceinte de chauffe) permet de chauffer de manière homogène l'espace de cuisson contenu dans l'enceinte de cuisson, ce qui procure des gâteaux cuits de manière homogène et reproductible dans un appareil de cuisson pour préparations pâtissières compact.

On peut aussi remarquer que les résistances électriques 13 et 23 se trouvent plus proches des réflecteurs 12 et 22 respectivement que des cuves internes 11 et 21 respectivement, toujours pour chauffer de manière homogène avec peu de points chauds l'espace de cuisson.

On peut prévoir par exemple un volume de l'enceinte de chauffe inférieur ou égal à 5.5 litres, et pour un gâteau de 1 kg soit environ 780 ml de pâte avant cuisson, on peut faire la comparaison qui suit.

Dans un four de 38 litres il faudrait environ 9,5 minutes de préchauffe pour atteindre 200°C en chaleur tournante puis 50 minutes pour atteindre une bonne cuisson à coeur dans un plat en aluminium soit une dépense énergétique totale de 0.888 kWh.

Dans l'appareil proposé, le plat est déposé à froid dans l'enceinte de cuisson et après 42 mn on atteint une bonne cuisson à coeur soit une dépense énergétique totale de 0.301 kWh. La cuisson est donc plus rapide et requiert moins d'énergie.

Un ou plusieurs évents 31 (visible figure 5) sont nécessaires pour l'évacuation de la vapeur produite lors de la cuisson. Un gâteau afin de former une croûte, ou des biscuits afin d'être croustillants doivent être desséchés en surface. La structure proposée par la présente invention consiste à traverser deux parois (enceinte de cuisson et enceinte de chauffe) pour évacuer cette vapeur d'eau. En effet la vapeur doit être dirigée vers l'extérieur du produit et ne pas risquer de stagner en contact avec des parties sensibles comme les éléments chauffants. De plus, la structure proposée par la présente invention consiste à diriger la vapeur et l'air chauds vers des zones qui ne sont pas utilisées comme préhension par le consommateur, afin de ne pas le brûler.

En particulier, la figure 5 montre un évent 31, sous forme de tube, traverser la cuve interne 21 et le réflecteur 22 du couvercle 20 pour guider vapeur et air chauds vers l'arrière de l'appareil de cuisson pour préparations pâtissières, à bonne distance donc des poignées 25a, 25b, 25c et de l'interface homme machine 15.

De manière avantageuse, on peut donc prévoir que le moule 40 (typiquement un moule souple en silicone par exemple) est amovible, et la cuve interne 11 et/ou le réflecteur 12 de l'embase 10 comprennent des formes d'accostage ou empreintes pour accueillir le moule 40 et le positionner correctement dans l'enceinte de cuisson.

On peut prévoir également que la cuve interne 11 de l'embase soit elle-même amovible pour pouvoir la nettoyer ou l'échanger avec une autre cuve interne de forme différente.

On peut aussi prévoir une sole de cuisson 16 visible sur la figure 4 et positionnée entre la résistance électrique 13 et la cuve interne 11 de l'embase 10 pour homogénéiser encore plus la chauffe de la cuve interne 11. La sole de cuisson 16 est typiquement une tôle ondulée, ou gaufrée en métal avec de multiples perforations pour laisser un flux d'air s'installer entre la résistance électrique 13 et la cuve interne 11.

On peut prévoir cette sole de cuisson 16 amovible, et même de la dimensionner pour qu'elle puisse alternativement se positionner comme montré sur la figure 4 ou sous le moule 40 afin d'apporter un support. Dans ce dernier cas, la sole de cuisson 16 peut être accueillie directement dans la cuve interne 11, ou alors la cuve interne 11 est retirée et la sole de cuisson 16 est placée à une hauteur adéquate en s'accrochant sur le réflecteur 12 par exemple.

Enfin, la cuve interne 11 de l'embase entre en contact avec un palpeur de température qui permet de réguler les résistances électriques 13 et 23 en même temps. La résistance électrique 23 du couvercle 20 est pourvue également d'un limiteur pour éviter une surchauffe du couvercle 20 en cas de charge importante de produit dans la cuve interne 11 de l'embase.

On comprendra que diverses modifications peuvent être apportées aux différents modes de réalisation de l'invention décrits dans la présente description sans sortir du cadre de l'invention défini par les revendications.

## Revendications

1. Appareil de cuisson pour préparations pâtissières comprenant une embase (10) et un couvercle (20) articulé sur l'embase (10) entre une première position relevée pour permettre l'introduction d'une préparation pâtissière dans une enceinte de cuisson et une deuxième position abaissée pour former un boitier de cuisson de la préparation pâtissière, le couvercle (20) et l'embase (10) comprenant chacun une portion du boîtier de cuisson et des moyens de chauffage, appareil dans lequel : le couvercle (20) et l'embase (10) comprennent chacun en outre un réflecteur (12, 22) et une cuve interne (11, 21),
- dans lequel dans la deuxième position abaissée :
- la cuve interne (21) du couvercle (20) et la cuve interne (11) de l'embase (10) forment l'enceinte de cuisson agencée pour recevoir la préparation pâtissière,
- le réflecteur (22) du couvercle (20) et le réflecteur (12) de l'embase (10) forment une enceinte de chauffe entourant l'enceinte de cuisson,
- et dans lequel les moyens de chauffage du couvercle (20) et de l'embase (10) sont disposés entre l'enceinte de chauffe et l'enceinte de cuisson, l'appareil étant **caractérisé en ce que** dans la deuxième position abaissée, le réflecteur (22) du couvercle (20) et le réflecteur (12) de l'embase (10) forment une enceinte de chauffe fermée.

2. Appareil de cuisson pour préparations pâtissières selon la revendication 1 dans lequel, dans la deuxième position abaissée, la cuve interne (21) du couvercle (20) et la cuve interne (11) de l'embase (10) présentent chacune un bord périphérique en regard l'un de l'autre et/ou en contact l'un avec l'autre.

3. Appareil de cuisson pour préparations pâtissières selon l'une des revendications précédentes, dans lequel le couvercle (20) est articulé sur l'embase (10) selon une liaison pivot agencée sur une partie arrière de l'appareil, l'appareil comprenant des poignées latérales (25a, 25b) et une interface de commande (15) sur une partie avant de l'appareil, l'appareil comprenant en outre au moins un évent (31) agencé pour évacuer de la vapeur d'eau depuis l'enceinte de cuisson vers l'extérieur du boîtier de cuisson, en partie arrière de l'appareil de cuisson.

4. Appareil de cuisson pour préparations pâtissières selon la revendication précédente dans lequel l'évent (31) est un conduit formé par un tube avec une première extrémité donnant dans l'enceinte de cuisson, et une deuxième extrémité donnant sur l'extérieur de l'appareil de cuisson.

5. Appareil de cuisson pour préparations pâtissières selon l'une des revendications précédentes, dans lequel, dans la deuxième position abaissée, un espace entre les réflecteurs (12, 22) et les cuves internes (11, 21) est un espace fermé.

6. Appareil de cuisson pour préparations pâtissières selon l'une des revendications précédentes, dans lequel la cuve interne (11) de l'embase (10) est amovible.

7. Appareil de cuisson pour préparations pâtissières selon l'une des revendications précédentes, dans lequel le couvercle (20) et/ou l'embase (10) comprennent des moyens de mesure de température de leur cuve interne (11, 21) respective.

8. Appareil de cuisson pour préparations pâtissières selon l'une des revendications précédentes comprenant des moyens de commande de cuisson agencés pour commander indépendamment la chauffe des moyens de chauffage du couvercle (20) et la chauffe des moyens de chauffage de l'embase (10).

9. Appareil de cuisson pour préparations pâtissières selon l'une des revendications précédentes, dans lequel, dans la deuxième position abaissée, l'enceinte de chauffe présente un volume inférieur à 5.5 litres.

10. Appareil de cuisson pour préparations pâtissières selon l'une des revendications précédentes, dans lequel dans le couvercle (20) et/ou l'embase (10), les moyens de chauffage sont agencés plus proches du réflecteur (12, 22) que de la cuve interne (11, 21).

11. Appareil de cuisson pour préparations pâtissières selon l'une des revendications précédentes, comprenant des moyens de positionnement et de maintien, agencés pour positionner et maintenir un moule (40) amovible, tel qu'un moule en silicone, dans l'enceinte de cuisson.

12. Appareil de cuisson pour préparations pâtissières selon l'une des revendications précédentes, comprenant une sole de cuisson (16), dans lequel les moyens de chauffage de l'embase (10) sont agencés entre la sole de cuisson (16) et le réflecteur (12) de l'embase (10).

13. Appareil de cuisson pour préparations pâtissières selon la revendication précédente, dans lequel la sole de cuisson (16) comprend une pluralité de perforations.

14. Appareil de cuisson pour préparations pâtissières selon l'une des revendications 12 ou 13, dans lequel la sole de cuisson (16) est une paroi métallique, telle qu'une paroi en aluminium.

## Patentansprüche

1. Backgerät für Backwarenzubereitungen, umfassend eine Basis (10) und einen Deckel (20), der an der Basis (10) angelenkt ist zwischen einer ersten angehobenen Stellung, um das Einbringen einer Backwarenzubereitung in eine Backkammer zu ermöglichen, und einer zweiten abgesenkten Stellung, um ein Backgehäuse für die Backwarenzubereitung zu bilden, wobei der Deckel (20) und die Basis (10) jeweils einen Abschnitt des Backgehäuses und Heizmittel umfassen, wobei bei dem Gerät:
- der Deckel (20) und die Basis (10) jeweils weiter einen Reflektor (12, 22) und einen Innenbehälter (11, 21) umfassen,
- wobei in der zweiten abgesenkten Stellung:
- der Innenbehälter (21) des Deckels (20) und der Innenbehälter (11) der Basis (10) die Backkammer bilden, die eingerichtet ist, um die Backwarenzubereitung aufzunehmen,
- der Reflektor (22) des Deckels (20) und der Reflektor (12) der Basis (10) eine Heizkammer bilden, die die Backkammer umgibt,
- und wobei die Heizmittel des Deckels (20) und der Basis (10) zwischen der Heizkammer und der Backkammer angeordnet sind, wobei das Gerät **dadurch gekennzeichnet ist, dass** in der zweiten abgesenkten Stellung der Reflektor (22) des Deckels (20) und der Reflektor (12) der Basis (10) eine geschlossene Heizkammer bilden.

2. Backgerät für Backwarenzubereitungen nach Anspruch 1, wobei in der zweiten abgesenkten Stellung der Innenbehälter (21) des Deckels (20) und der Innenbehälter (11) der Basis (10) jeweils einen Umfangsrand aufweisen, die einander gegenüberliegen und/oder miteinander in Kontakt stehen.

3. Backgerät für Backwarenzubereitungen nach einem der vorstehenden Ansprüche, wobei der Deckel (20) an der Basis (10) angelenkt ist gemäß einer Schwenkverbindung, welche an einem hinteren Teil des Geräts eingerichtet ist, wobei das Gerät seitliche Griffe (25a, 25b) und eine Bedienschnittstelle (15) an einem vorderen Teil des Geräts umfasst, wobei das Gerät weiter mindestens eine Entlüftung (31), die eingerichtet ist, um Wasserdampf aus der Backkammer zur Außenseite des Backgehäuses abzuführen, am hinteren Teil des Backgeräts umfasst.

4. Backgerät für Backwarenzubereitungen nach dem vorstehenden Anspruch, wobei die Entlüftung (31) eine Leitung ist, die von einem Rohr mit einem ersten Ende, das in die Backkammer geht, und einem zweiten Ende, das auf die Außenseite des Backgeräts geht, gebildet wird.

5. Backgerät für Backwarenzubereitungen nach einem der vorstehenden Ansprüche, wobei in der zweiten abgesenkten Stellung ein Raum zwischen den Reflektoren (12, 22) und den Innenbehältern (11, 21) ein geschlossener Raum ist.

6. Backgerät für Backwarenzubereitungen nach einem der vorstehenden Ansprüche, wobei der Innenbehälter (11) der Basis (10) herausnehmbar ist.

7. Backgerät für Backwarenzubereitungen nach einem der vorstehenden Ansprüche, wobei der Deckel (20) und/oder die Basis (10) Mittel zum Messen der Temperatur ihres jeweiligen Innenbehälters (11, 21) umfassen.

8. Backgerät für Backwarenzubereitungen nach einem der vorstehenden Ansprüche, das Backsteuerungsmittel umfasst, die eingerichtet sind, um das Heizen der Heizmittel des Deckels (20) und das Heizen der Heizmittel der Basis (10) unabhängig zu steuern.

9. Backgerät für Backwarenzubereitungen nach einem der vorstehenden Ansprüche, wobei in der zweiten abgesenkten Stellung die Heizkammer ein Volumen von weniger als 5,5 Liter aufweist.

10. Backgerät für Backwarenzubereitungen nach einem der vorstehenden Ansprüche, wobei im Deckel (20) und/oder der Basis (10) die Heizmittel näher am Reflektor (12, 22) als am Innenbehälter (11, 21) eingerichtet sind.

11. Backgerät für Backwarenzubereitungen nach einem der vorstehenden Ansprüche, das Positionier- und Haltemittel umfasst, die eingerichtet sind, um eine herausnehmbare Form (40), wie etwa eine Silikonform, in der Backkammer zu positionieren und zu halten.

12. Backgerät für Backwarenzubereitungen nach einem der vorstehenden Ansprüche, das eine Backsohle (16) umfasst, wobei die Heizmittel der Basis (10) zwischen der Backsohle (16) und dem Reflektor (12) der Basis (10) eingerichtet sind.

13. Backgerät für Backwarenzubereitungen nach dem vorstehenden Anspruch, wobei die Backsohle (16) eine Vielzahl von Perforationen umfasst.

14. Backgerät für Backwarenzubereitungen nach einem der Ansprüche 12 oder 13, wobei die Backsohle (16) eine metallische Wand, wie etwa eine Wand aus Aluminium, ist.

## Claims

1. Cooking appliance for pastry preparations, comprising a base (10) and a cover (20) hingedly connected to the base (10) between a first raised position to enable the introduction of a pastry preparation into a cooking chamber and a second lowered position to form a cooking box for the pastry preparation, the cover (20) and the base (10) each comprising a portion of the cooking box and heating means, appliance wherein:
- the cover (20) and the base (10) each further comprise a reflector (12, 22) and an internal tank (11, 21),
- wherein, in the second lowered position:
- the internal tank (21) of the cover (20) and the internal tank (11) of the base (10) form the cooking chamber arranged to receive the pastry preparation,
- the reflector (22) of the cover (20) and the reflector (12) of the base (10) form a heating chamber surrounding the cooking chamber,
- and wherein the heating means of the cover (20) and of the base (10) are disposed between the heating chamber and the cooking chamber, the appliance being **characterised in that** in the second lowered position, the reflector (22) of the cover (20) and the reflector (12) of the base (10) form a closed heating chamber.

2. Cooking appliance for pastry preparations according to claim 1, wherein, in the second lowered position, the internal tank (21) of the cover (20) and the internal tank (11) of the base (10) each have a peripheral edge facing one another and/or in contact with one another.

3. Cooking appliance for pastry preparations according to one of the preceding claims, wherein the cover (20) is hingedly connected to the base (10) about a pivot connection arranged on a rear part of the appliance, the appliance comprising side handles (25a, 25b) and a control interface (15) on a front part of the appliance, the appliance further comprising at least one vent (31) arranged to discharge steam from the cooking chamber outwards from the cooking box, in the rear part of the cooking appliance.

4. Cooking appliance for pastry preparations according to the preceding claim, wherein the vent (31) is a conduit formed by a tube with a first end opening into the cooking chamber, and a second end opening outwards from the cooking appliance.

5. Cooking appliance for pastry preparations according to one of the preceding claims, wherein, in the second lowered position, a space between the reflectors (12, 22) and the internal tanks (11, 21) is a closed space.

6. Cooking appliance for pastry preparations according to one of the preceding claims, wherein the internal tank (11) of the base (10) is removable.

7. Cooking appliance for pastry preparations according to one of the preceding claims, wherein the cover (20) and/or the base (10) comprise means for measuring the temperature of their respective internal tank (11, 21).

8. Cooking appliance for pastry preparations according to one of the preceding claims, comprising cooking control means arranged to independently control the heating of the heating means of the cover (20) and the heating of the heating means of the base (10).

9. Cooking appliance for pastry preparations according to one of the preceding claims, wherein, in the second lowered position, the heating chamber has a volume less than 5.5 litres.

10. Cooking appliance for pastry preparations according to one of the preceding claims, wherein, in the cover (20) and/or the base (10), the heating means are arranged closer to the reflector (12, 22) than to the internal tank (11, 21).

11. Cooking appliance for pastry preparations according to one of the preceding claims, comprising positioning and holding means, arranged to position and hold a removable mould (40), such as a silicone mould, in the cooking chamber.

12. Cooking appliance for pastry preparations according to one of the preceding claims, comprising a cooking base (16), wherein the heating means of the base (10) are arranged between the cooking base (16) and the reflector (12) of the base (10).

13. Cooking appliance for pastry preparations according to the preceding claim, wherein the cooking base (16) comprises a plurality of perforations.

14. Cooking appliance for pastry preparations according to one of claims 12 or 13, wherein the cooking base (16) is a metal wall, such as an aluminium wall.
